Europäisches Patentamt

European Patent Office

Office européen des brevets

(11) Numéro de publication: **0 284 534 B1**

# FASCICULE DE BREVET EUROPEEN

(45) Date de publication de fascicule du brevet: **19.11.92** (51) Int. Cl.5: **H04L 12/54**

(21) Numéro de dépôt: **88460004.0**

(22) Date de dépôt: **10.02.88**

(54) Système de commutation de multiplex temporels hybrides.

(30) Priorité: **27.02.87 FR 8702892**

(43) Date de publication de la demande:
**28.09.88 Bulletin 88/39**

(45) Mention de la délivrance du brevet:
**19.11.92 Bulletin 92/47**

(84) Etats contractants désignés:
**BE DE ES GB IT NL SE**

(56) Documents cités:
EP-A- 0 059 149      EP-A- 0 108 028
EP-A- 0 113 307      EP-A- 0 113 639
WO-A-84/01246       FR-A- 2 425 778

PROCEEDINGS OF THE INTERNATIONAL
SWITCHING SYMPOSIUM, TELECOMMUNICA-
TION SWITCHING, Florence, 7-11 mai 1984,
Session 32C, paper 2, pages 1-7, North-
Holland, Amsterdam, NL; A. THOMAS et al.:
"Asynchronous time-division techniques: an
experimental packet network integrating videocommunication"

(73) Titulaire: **FRANCE TELECOM**
**6 place d'Alleray**
**F-75015 Paris(FR)**

(72) Inventeur: **François, Joel**
**Prat Cotel Bihan Saint Ouay Perros**
**F-22700 Perros-Guirec(FR)**
Inventeur: **Ouinquis, Jean-Paul**
**14, rue de Cornic**
**F-22700 Perros-Guirec(FR)**
Inventeur: **Servel, Michel**
**Le Rhu en Servel**
**F-22300 Lannion(FR)**

(74) Mandataire: **Le Guen, Louis François**
**Cabinet Louis Le Guen 38, rue Levavasseur**
**B.P. 91**
**F-35802 Dinard Cédex(FR)**

Rank Xerox (UK) Business Services

## Description

La présente invention concerne un système de commutation de multiplex temporels hybrides, chaque multiplex temporel hybride entrant et sortant étant formé de trames dont certains intervalles de temps transportent chacun un bloc de données de type circuit et dont d'autres intervalles de temps transportent chacun un bloc de données de type paquet.

Dans un multiplex temporel MIC, les intervalles de temps sont identifiés, d'une manière implicite, par leurs positions dans chaque trame et, dans les commutateurs temporels de multiplex MIC, après création d un supermultiplex sous forme de mots parallèles de huit bits et modification de l'ordre temporel des mots, un démultiplexage spatial permet d'aiguiller les mots en fonction de leur rang dans le temps.

Dans le brevet EP 0 108 028, il est décrit un multiplex temporel dans lequel chaque intervalle de temps peut contenir un paquet comportant une étiquette de longueur fixe devant le champ de données du paquet. Dans le brevet EP 0 113 639, il est décrit un commutateur temporel de paquets portés sur de tels multiplex. Dans ce commutateur, on utilise une matrice de rotation pour obtenir un supermultiplex parallèle de mots dans lequel existe un décalage temporel d'une unité entre les mots successifs d'un même paquet. A la sortie, une autre matrice de rotation restitue, pour chaque paquet, l'ordre initial des mots. On peut considérer que la première matrice effectue une conversion parallèle-diagonale ou encore une conversion "paragonale".

La tendance actuelle consiste à prévoir des réseaux temporels hybrides de communication dont les multiplex entrants et sortants sont capables de porter des informations en mode circuit et des informations en mode paquet. Le multiplex temporel défini dans le brevet EP 0 108 028 a une structure qui convient à ces réseaux hybrides, à la condition de grouper ses intervalles de temps en trames et d'attribuer des intervalles de temps à des communications de type circuit et d'autres à des communications de type paquet, la gestion des attributions étant effectuée, en fonction des besoins de communications, par une unité de commande.

Un objet de la présente invention consiste à prévoir un système de commutation hybride utilisant ladite conversion "paragonale" pour commuter aussi bien les blocs de données de type circuit que les blocs de données de type paquet. Dans la suite, pour plus de concision, on désignera les blocs de données de type paquet par "paquet" et les blocs de données de type circuit par "voie".

Suivant une caractéristique de l'invention, il est prévu un système de commutation de multiplex temporels hybrides, chaque multiplex temporel hybride entrant et sortant étant formé de trames dont les intervalles de temps de longueur fixe transportent chacun un bloc de mot formant soit un paquet, soit une voie, sauf le premier intervalle de temps de chaque trame qui contient un bloc de synchronisation de trame, les multiplex entrant étant appliqués à un commutateur temporel de paquets utilisant une conversion paragonale et comportant un circuit d'entrée par multiplex entrant, une matrice de rotation d'entrée, une mémoire tampon de paquets, des circuits de transfert, une matrice de rotation de sortie, une base de temps, une mémoire de traduction d'étiquette et des files de mémorisation des adresses d'écriture des paquets dans la mémoire tampon et étant chacune associée à un multiplex de sortie, chaque circuit d'entrée comprenant un circuit de synchronisation capable de reconnaître la présence d'un bloc de synchronisation de trame, une file et un convertisseur série-parallèle de mot, dans lequel le circuit de synchronisation de chaque circuit d'entrée délivre aussi, à la file, le rang de chaque intervalle de temps dans une trame, cette information de rang étant transmise des circuits d'entrée à la matrice de rotation d'entrée laquelle a une sortie associée à sa première sortie et délivrant ladite information de rang laquelle avec l'information d'identification du multiplex entrant forme une information d'identité de bloc qui est appliquée à l'entrée d'adresse d'une mémoire de discrimination, programmable dont la sortie est reliée à des moyens de blocage des signaux de validation délivrés par la mémoire de traduction d'étiquette aux files de mémorisation d'adresse, les sorties de la matrice de rotation d'entrée étant encore reliées à des secondes mémoires tampons correspondantes dont les entrées d'adresse d'écriture reçoivent l'information d'identité de bloc, dont les entrées d'adresse de lecture sont reliées à la sortie d'une mémoire de commande de lecture et dont les sorties sont reliées aux entrées correspondantes des circuits de transfert, l'entrée d'adresse de la mémoire de commande de lecture recevant de la base de temps des informations séquentielles et délivrant encore deux signaux qui sont appliqués à une circuit de commande de commutation des circuits de transfert et dont le premier est relié à des moyens d'inhibition de la lecture des files de mémorisation.

Suivant une autre caractéristique, il est prévu un système de commutation de multiplex temporels hybrides, chaque multiplex temporel hybride entrant et sortant étant formé de trames dont les intervalles de temps de longueur fixe transportent chacun un bloc de mots formant soit des paquets, soit des voies, sauf le premier intervalle de temps d'une trame qui contient un bloc de synchronisation de trame, chaque multiplex entrant étant appliqué, d'une part, à un circuit d'entrée comprenant un circuit de synchronisation capable de reconnaître les blocs de synchronisation de trame, une file et un convertisseur série-parallèle de mot dont la sortie est reliée à la file dont la sortie constitue la sortie du circuit d'entrée, les sorties de circuits d'entrée étant reliées aux entrées d'une matrice de rotation d'entrée dont les sorties sont reliées, sauf la première, à des premières mémoires tampons correspondantes, ladite première sortie étant reliée aux entrées d'adresse d'une première mémoire de commande, programmable à accès aléatoire, le système de commutation comprenant encore une base de temps délivrant séquentiellement, au rythme de l'horloge octet, l'information d'identification des multiplex entrants aux entrées de lecture des files des circuits d'entrée, à l'entrée de commande de la matrice de rotation d'entrée et aux autres entrées d'adresse de ladite première mémoire de commande, la sortie de données de ladite première mémoire de commande délivrant un mot en substitution du mot reçu de la première sortie de la matrice de rotation d'entrée à une première mémoire tampon, et délivrant des signaux de validation d'écriture vers des files de mémorisation respectivement affectées aux multiplex de sortie et recevant de la base de temps les adresses des mots mémorisés dans ladite première mémoire, les sorties desdites premières mémoires étant reliées à des entrées correspondantes de circuits de transfert dont les sorties sont reliées aux entrées correspondantes d'une matrice de rotation de sortie dont les sorties délivrent, par l'intermédiaire de convertisseurs parallèle-série, les multiplex temporels sortants, la base de temps délivrant également l'information d'identification des multiplex sortants aux entrées de lecture desdites files de mémorisation et à l'entrée de commande de la matrice de rotation de sortie, les sorties des files de mémorisation délivrant les adresses de lecture dans les premières mémoires, dans lequel le circuit de synchronisation de chaque circuit d'entrée délivre aussi, à la file, le rang de chaque intervalle de temps dans une trame, cette information de rang étant transmise des circuits d'entrée à la matrice de rotation d'entrée laquelle a une sortie de rang associé à sa première sortie et délivrant ladite information de rang laquelle avec l'information d'identification du multiplex entrant forme une information d'identité de bloc qui est appliquée à l'entrée d'adresse d'une seconde mémoire de discrimination, programmable dont la sortie est reliée à des moyens de blocage des signaux de validation délivrés par la première mémoire de commande, les sorties de la matrice de rotation d'entrée étant encore reliées à des secondes mémoires tampons correspondantes dont les entrées d'adresse d'écriture reçoivent l'information d'identité de bloc, dont les entrées d'adresse de lecture sont reliées à la sortie d'une troisième mémoire de commande et dont les sorties sont reliées aux entrées correspondantes des circuits de transfert, l'entrée d'adresse de la troisième mémoire de commande recevant de la base de temps des informations séquentielles et délivrant encore deux signaux qui sont appliqués à une circuit de commande de commutation des circuits de transfert et dont le premier est relié à des moyens d'inhibition de la lecture des files de mémorisation.

Les caractéristiques de l'invention mentionnées ci-dessus, ainsi que d'autres, apparaîtront plus clairement à la lecture de la description d'exemples de réalisation, ladite description étant faite en relation avec les dessins joints, parmi lesquels:

la Fig. 1 est un diagramme temporel d'un multiplex temporel suivant l'invention,

les Figs. 2a à 2d, assemblées comme l'indique la Fig 3, représentent le schéma d'un commutateur temporel suivant l'invention,

la Fig. 4 est le bloc-diagramme d'un circuit d'entrée du commutateur des Figs. 2a à 2d, auquel est appliqué un multiplex entrant,

la Fig. 5 est le schéma du circuit de contrôle de trame et de synchronisation utilisé dans le circuit d'entrée de la Fig. 4,

la Fig. 6 illustre un exemple de positions relatives des multiplex entrants à la sortie des circuits d'alignement du commutateur,

la Fig. 7 est le schéma d'un circuit de sélection de bloc utilisé dans le commutateur de l'invention,

les Figs. 8 et 9 sont des schémas de circuits de transfert du commutateur de l'invention, et

la Fig. 10 est un bloc-diagramme d'une variante du commutateur des Figs. 2a à 2d.

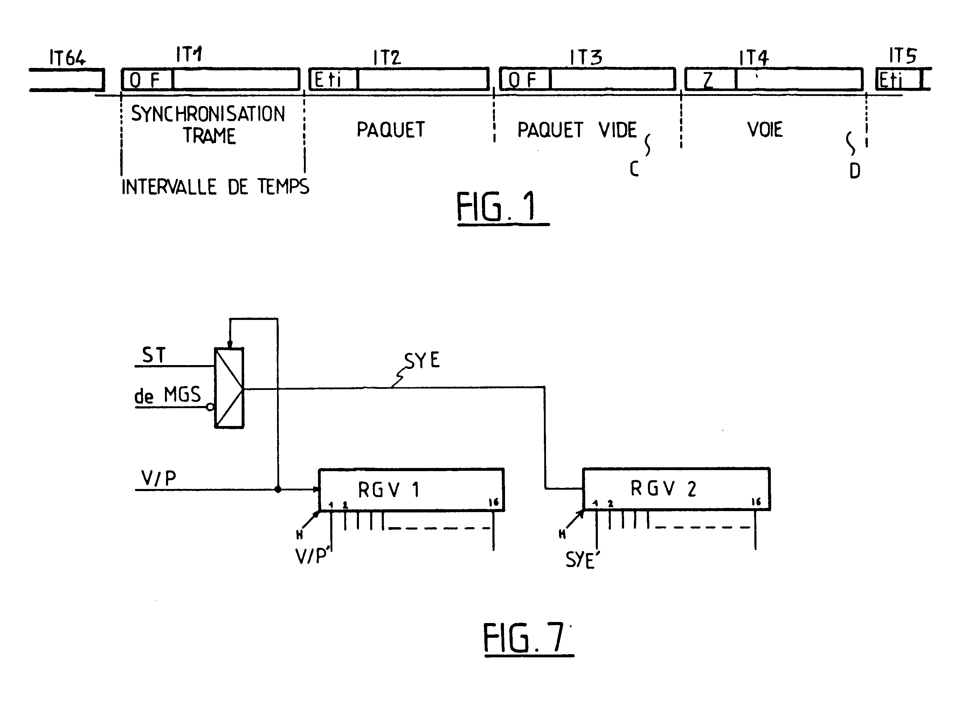

Le multiplex temporel de la Fig. 1 est formé d'intervalles de temps qui ont chacun une longueur constante de 16 octets, par exemple. En pratique, le multiplex de la Fig. 1 a une structure analogue à celle du multiplex décrit dans le brevet EP-A-0 108 028, mais les intervalles de temps y sont groupés en trames et certains des intervalles de temps portent des blocs de données du type circuit au lieu de données du type paquet.

A la Fig. 1, l'intervalle de temps IT0 contient un bloc de synchronisation trame, l'intervalle de temps IT1 contient un bloc du type paquet ou plus simplement un paquet, l'intervalle de temps IT2 contient un paquet vide, l'intervalle de temps IT3 contient un bloc de type circuit ou plus simplement une voie, l'intervalle de temps IT4 contient un paquet, et ainsi de suite. Dans l'exemple de réalisation décrit, chaque trame contient soixante-quatre intervalles de temps.

En pratique, dans un multiplex du type de celui de la Fig. 1, les allocations des intervalles de temps sont commandées par une unité de commande qui agit au point d'origine du multiplex. On suppose que cette unité de commande, lors de l'établissement d'une communication de type circuit, lui alloue un ou plusieurs intervalles de temps par trame, ce ou ces intervalles de temps se trouvant toujours à la même place dans chaque trame pendant la durée de la communication. Les autres intervalles de temps, sauf celui qui est réservé à la synchronisation trame, sont utilisés pour la transmission de paquets dans l'ordre déterminé par une file d'attente. Quand cette file est vide, l'intervalle de temps correspondant est rempli par un paquet vide. Les paquets comportent classiquement une étiquette Eti qui est analysée au point d'arrivée du multiplex afin de poursuivre l'acheminement du paquet.

Dans l'exemple de réalisation décrit, le motif du bloc de synchronisation de trame est:

0000111100110011......00110011 (128 bits)

et le motif d'un paquet vide est:

0000111101010101......01010101 (128 bits)

Comme, dans le multiplex décrit dans le brevet EP-A-0 108 028, les motifs des paquets vides sont utilisés pour assurer une fonction de synchronisation au niveau des intervalles de temps. On notera que, dans l'exemple de réalisation décrit, les premiers octets OF du bloc de synchronisation de trame et de paquet vide sont identiques.

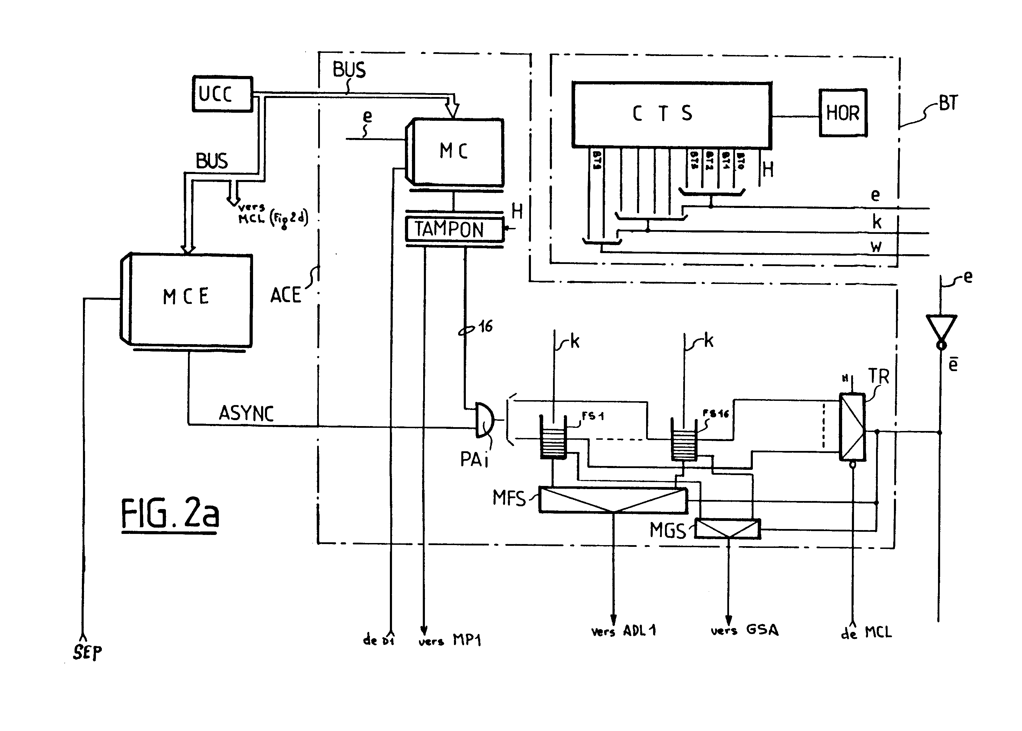

Le commutateur des Figs. 2a à 2d comprend des circuits d'entrée CE1 à CE16, une base de temps BT, un circuit d'aiguillage et de conversion d'étiquette ACE, une matrice de rotation d'entrée MRE, deux mémoires tampons MP et MV, une matrice de rotation de sortie MRS, des convertisseurs parallèle-série p/s1 à p/s16, une mémoire de discrimination MCE et une unité de commande UCC.

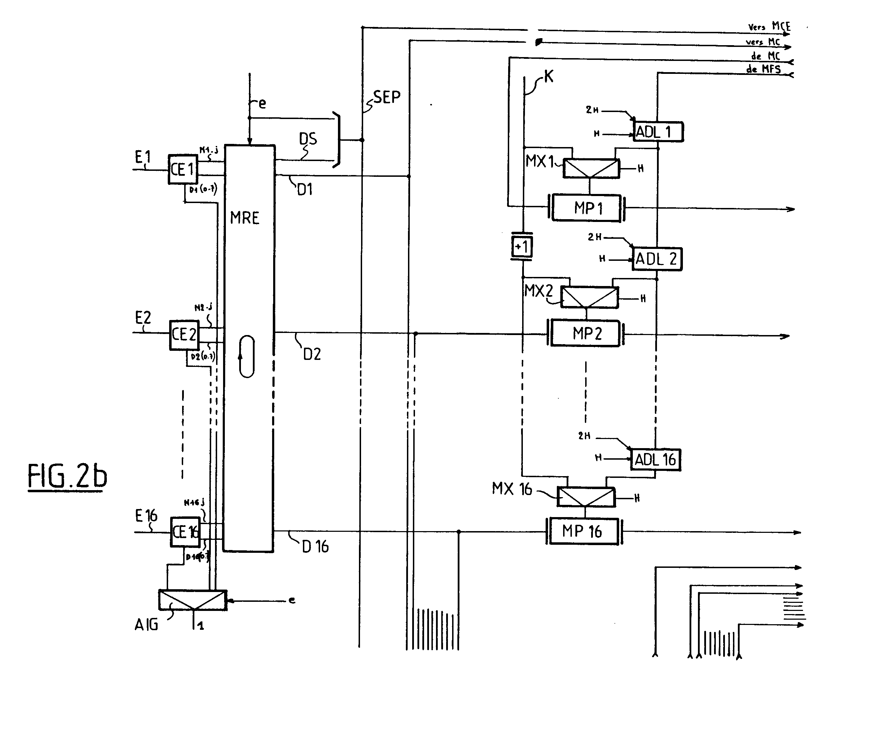

La Fig. 2b montre seize jonctions E1 à E16 portant chacune un multiplex suivant la Fig. 1 et respectivement reliées aux entrées des circuits d'entrée CE1 à CE16.

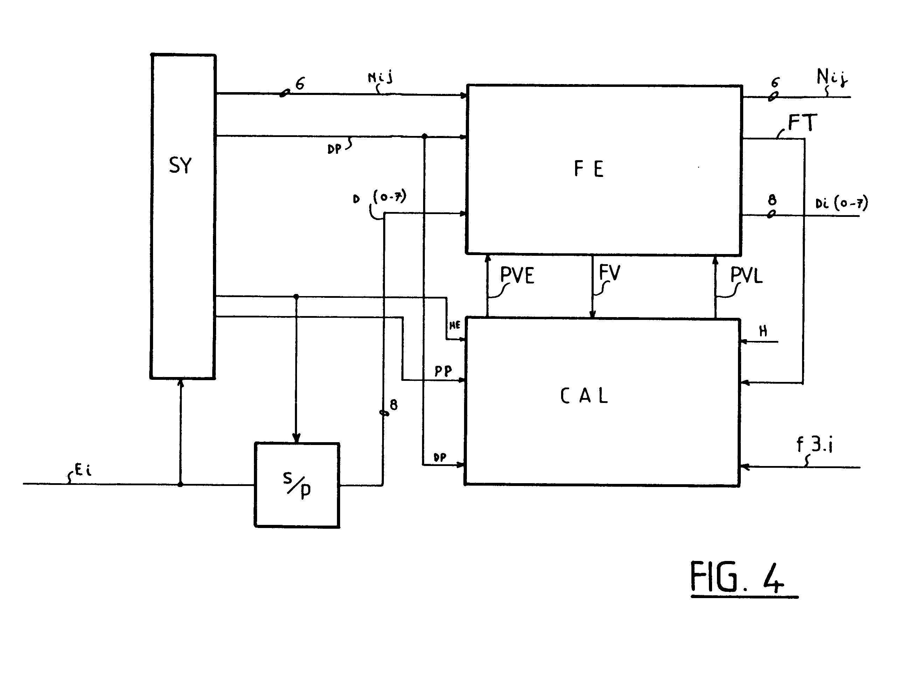

Chaque circuit d'entrée CEi, Fig. 4, comprend un convertisseur série-parallèle s/p, un circuit de contrôle de trame et de synchronisation SY, une file ou mémoire FiFo FE et un circuit logique CAL. Dans le circuit d'entrée CEi, la jonction d'entrée Ei est reliée à l'entrée du convertisseur s/p qui délivre des octets parallèles et dont la sortie est reliée, par une liaison à huit fils D(0-7), à une entrée de données de la file FE. En dérivation sur l'entrée du convertisseur s/p est monté le circuit SY qui analyse le multiplex entrant et qui délivre l'horloge octet d'entrée HE, un bit DP qui est au niveau "1" chaque fois que l'octet appliqué par les fils D(0-7) est un octet de début de bloc, un bit PP qui est au niveau "1" chaque fois que le bloc entrant n'est pas un paquet vide, et un mot de six bits Ni.j qui indique le rang j du bloc concerné dans la trame du multiplex de la jonction Ei. L'horloge octet d'entrée HE est appliquée à l'entrée de commande du convertisseur s/p. Le bit DP et le mot Ni.j sont appliqués à des entrées de données correspondantes de la file FE.

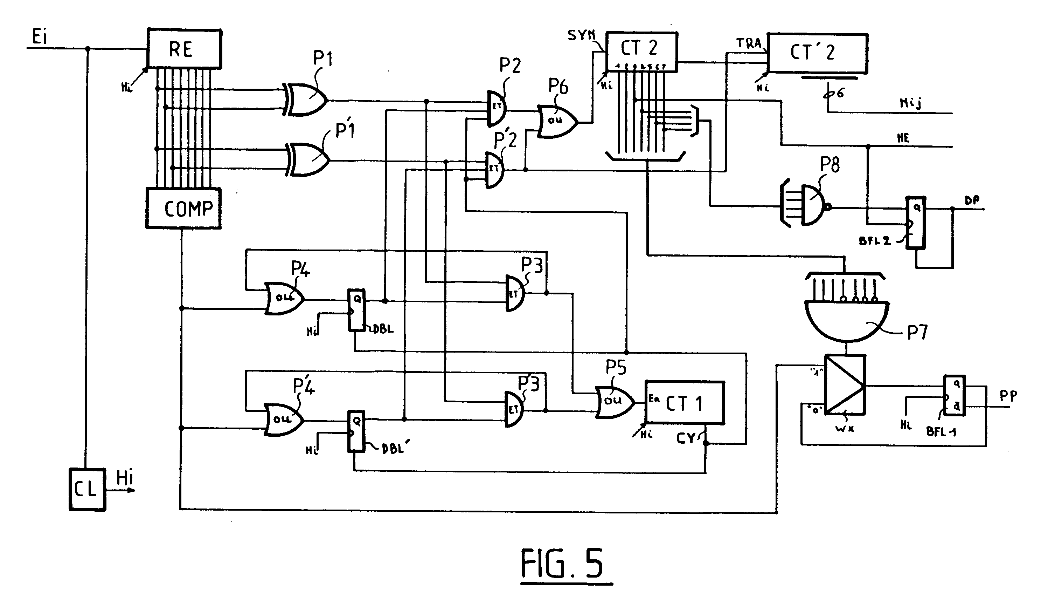

Le schéma du circuit SY est montré à la Fig. 5. La jonction Ei est reliée, en parallèle, à l'entrée série d'un registre à décalage de huit bits RE et à l'entrée d un circuit de récupération du rythme bit CL, lequel délivre l'horloge bit incidente Hi. Le registre RE reçoit le signal Hi sur son entrée d'horloge et a ses huit sorties parallèles reliées aux huit premières entrées parallèles d'un comparateur COMP. Parmi les huit secondes entrées, non montrées, du comparateur COMP, les quatre premières sont au niveau binaire "0" et les quatre dernières au niveau binaire "1", ce qui correspond au contenu OF d'un premier octet de bloc de synchronisation de trame ou d'un paquet vide.

Les sorties parallèles de rang "1" et "2" du registre RE sont reliées aux entrées d'une porte OU-exclusif P1 tandis que ses sorties parallèles de rang "1" et "3" sont reliées aux entrées d'une porte OU-exclusif P′1. La sortie de la porte P1 est reliée aux premières entrées de deux portes ET P2 et P3 tandis que la sortie de la porte P′1 est reliées aux premières entrées de deux portes ET P′2 et P′3.

La sortie du comparateur COMP est reliée aux premières entrées de deux portes OU P4 et P′4. La seconde entrée de la porte P4 est reliée à la sortie de la porte P3 et sa sortie est reliée à l'entrée D d'une bascule DBL dont l'entrée d'horloge reçoit le signal Hi, la sortie Q est reliée à la seconde entrée de la porte P3 et l'entrée de remise à zéro est reliée à la sortie CY d'un compteur CT1. La seconde entrée de la porte P′4 est reliée à la sortie de la porte P′3 et sa sortie est reliée à l'entrée D d'une bascule DBL' dont l'entrée d'horloge reçoit le signal Hi, la sortie Q est reliée à la seconde entrée de la porte P'3 et l'entrée de remise à zéro est reliée à la sortie CY du compteur CT1.

Le compteur CT1 est un compteur binaire à sept bits dont l'entrée d'horloge reçoit le signal Hi et l'entrée de signal En est reliée à la sortie d'une porte OU P5 dont les entrées sont respectivement reliées aux sorties des portes P3 et P′3. Quand l'entrée En est au niveau bas, le compteur CT1 est bloqué sur le compte "8". Sa sortie CY, correspondant à la sortie de compte "127", est encore respectivement reliée aux secondes entrées des portes P2 et P′2. La troisième entrée de la porte P2 est reliée à la sortie Q de la bascule DBL tandis que la troisième entrée de la porte P′2 est reliée à la sortie Q de la bascule DBL′.

Les sorties des portes P2 et P′2 sont respecti-

vement reliées aux entrées d'une porte OU P6 dont la sortie est reliée à l'entrée SYN d'un compteur CT2 qui est un compteur binaire à huit bits dont l'entrée d'horloge reçoit le signal Hi. Quand l'entrée SYN du compteur CT2 passe au niveau haut, ce compteur est réinitialisé à zéro.

La sortie de la porte P'2 est encore reliée à l'entrée TRA d'un compteur CT'2 dont l'entrée de validation est reliée à la sortie de débordement du compteur CT2 et l'entrée d'horloge reçoit le signal Hi. Le compteur CT'2 est un compteur binaire à six bits dont les sorties parallèles délivrent un mot de six bits sur la liaison Ni.j reliée à la file FE, ce mot correspondant au rang de chaque intervalle de temps dans sa trame.

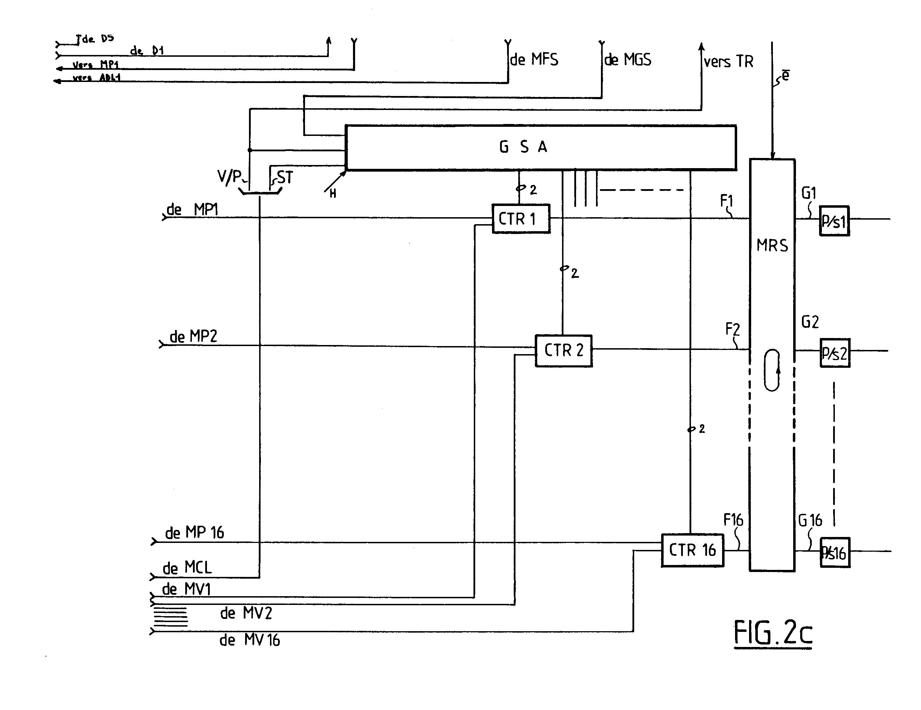

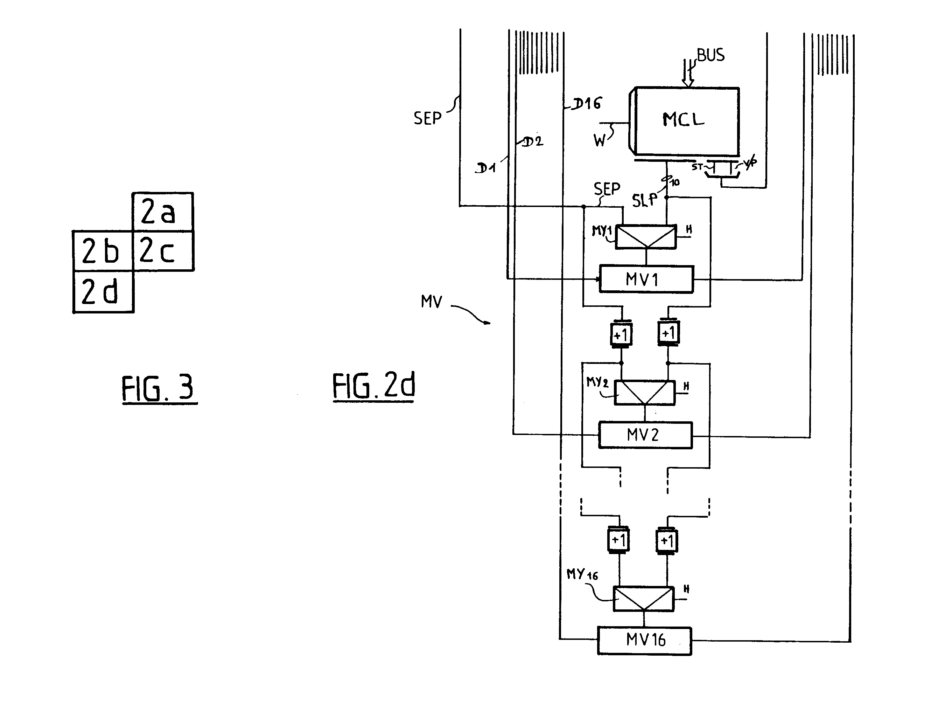

On pourra se reporter aux Figs. 2 et 3 du brevet EP-A-0 108 028 en ce qui concerne le détail des fonctionnements des circuits RE, COMP, DBL, P1 à P3, CT1 et CT2.

Dans l'exemple décrit, le premier octet d'un paquet vide et d'un bloc de synchronisation trame est 00001111. Donc, le comparateur COMP compare l'octet délivré en parallèle par le registre RE à la configuration 00001111 et, quand une comparaison positive est obtenue, il délivre une impulsions de niveau haut, laquelle active respectivement, par les porte OU P4 et P'4, le passage à l'état "1" des bascules DBL et DBL' Les entrées des portes P3 et P'3, qui sont respectivement reliées aux sorties Q des bascules DBL et DBL', passent donc au niveau haut pendant le $9^e$ temps bit.

Par ailleurs, jusqu'au $8^e$ temps bit, les sorties des portes OU-exclusif P1 et P'1 sont au niveau bas puisque leurs entrées sont à "0".

S'il s'agit d'un paquet vide, au début du $9^e$ temps bit, la sortie de P1 passe au niveau haut. Donc, à cet instant, la porte ET P3 délivre un signal à la première entrée de la porte OU P5 qui délivre un signal de déclenchement de comptage au compteur CT1 qu'elle maintenait jusque là dans un état bloqué à "8".

Par ailleurs, le signal de sortie de la porte P3 est appliqué à la seconde entrée de la porte OU P4. Ainsi, quand au $9^e$ temps bit, la sortie du comparateur COMP repasse au niveau bas, l'entrée D de la bascule DBL est maintenue au niveau haut.

S'il s'agit d'un bloc de synchronisation de trame, au $9^e$ temps bit, la sortie de P'1 passe au niveau haut. Donc, à cet instant, la porte P'3 délivre un signal à la seconde entrée de la porte OU P5 qui délivre un signal de déclenchement de comptage au compteur CT1, comme dans le cas précédent.

Par ailleurs, le signal de sortie de la porte P'3 est appliqué à la seconde entrée de la porte OU P'4. Ainsi, quand au $9^e$ temps bit, la sortie du comparateur COMP repasse au niveau bas, l'entrée D de la bascule DBL' reste au niveau haut.

Dans le cas d'un paquet vide, la sortie de la porte P1 reste à "1" pendant 119 périodes d'horloge et, de même dans le cas d'un bloc de synchronisation de trame, la sortie de la porte P'1 reste à "1" pendant 119 périodes d'horloge. Donc, dans les deux cas, aucune réinitialisation n'intervient sur le compteur CT1 qui compte jusqu'à la valeur 127 pour laquelle sa sortie CY est activée.

Si, au $128^e$ bit, la sortie de la porte P1 et la sortie Q de la bascule BDL sont toujours à "1", ou bien la sortie de la porte P'1 et la sortie Q de la bascule BDL' toujours à "1", le signal de la sortie CY passe la porte ET P2 ou la porte ET P'2, ce qui, à travers la porte OU P6, initialise le compteur CT2 qui recommence à compter à partir de 0. Par ailleurs, le signal de la sortie CY remet à zéro les bascules DBL et DBL' ce qui bloque la porte P3 ou la porte P'3 et le compteur CT1 est réinitialisé à "8".

De plus, dans le cas de la réception d'un bloc de synchronisation de trame, la sortie de la porte P'2, passant au niveau haut, initialise le compteur CT'2. Quand le compteur CT2 déborde, il autorise l'application du signal d'horloge, ce qui assure la synchronisation bit des deux compteurs CT2 et CT'2.

Le compteur CT2 a sa troisième sortie parallèle qui fournit l'horloge octet HE.

Une bascule BFL1 a son entrée d'horloge qui reçoit le signal Hi, son entrée D qui est reliée à la sortie d'un multiplexeur WX, sa sortie Q reliée à l'entrée de données "0" du multiplexeur WX et sa sortie Q qui fournit le signal PP. L'entrée de données "1" du multiplexeur WX est reliée à la sortie du comparateur COMP et son entrée de commande reliée à la sortie d'une porte ET P7 à trois entrées directes respectivement reliées aux trois premières sorties parallèles du compteur CT2 et quatre entrées inverseuses respectivement reliées aux quatre sorties suivantes du même compteur CT2.

La sortie de la porte P7 passe au niveau haut un temps d'octet après chaque passage par zéro du compteur CT2. A cet instant, s'il s'agit d'un paquet vide ou d'un bloc de synchronisation de trame, l'entrée "1" du multiplexeur WX est à "1" ce que la bascule recopie en mettant au niveau bas le signal PP. Dans le cas contraire, le multiplexeur WX délivre un signal de niveau bas et le signal PP passe au niveau haut. Le signal PP est utilisé dans le circuit logique CAL pour ne laisser entrer dans la file FE que les paquets et les blocs de voie.

Une bascule BFL2 a son entrée d'horloge qui reçoit le signal HE, son entrée D qui est reliée à la sortie d'une porte NON-ET P8 à quatre entrées rsspectivement reliées aux quatre dernières sorties du compteur CT2, et sa sortie Q qui délivre le signal DP et qui est aussi reliée à son entrée de remise à zéro.

L'entrée de la bascule BFL2 est mise à "1" après chaque premier octet d'un bloc et sa sortie Q transmet donc bien à la file FE le signal DP de début de bloc.

La file FE contient donc une suite de mots de 15 bits chacun. Elle a une taille supérieure à 16 mots. Ses sorties de données sont respectivement reliées à huit fils Di(0-7), à six fils Ni.j(0-5) et à un fil ST de sortie de début de paquet.

La file FE fonctionne sous la commande du circuit logique CAL qui comprend les mêmes composants discrets (portes, bascules et inverseurs) que ceux qui sont montrés à la Fig. 2 du brevet EP-A-0 113 639 ou encore à la Fig. 1 du brevet EP-A-0 113 307. Le circuit logique CAL délivre à la file FE les signaux d'écriture PVE et de lecture PVL. Il reçoit les signaux d'horloge octet d'entrée HE, d'horloge octet de sortie H, de présence de paquet vide PP, d'entrée de début de bloc DP, de sortie de début de bloc ST, d'état de file vide FV fourni par la file FE, et de synchronisation de lecture f3.i.

Le fonctionnement de l'ensemble de la file FE et du circuit logique CAL est décrit en détail dans les brevets européens mentionnés ci-dessus.

En pratique, les circuits d'entrées CE1 à CE16, Fig. 2b, constituent les moyens de décalage dans le temps des multiplex entrants E1 à E16, lesquels ne sont que plésiochrones en ce qui concerne le rythme bit, de façon que les en-têtes sortant des circuits CE1 à CE16 soient délivrées séquentiellement au rythme de l'horloge octet de sortie HL. Le décalage est assuré par celui des signaux f3.1 à f3.16 appliqués aux circuits CAL des différents circuits CE1 à CE16, comme on le verra dans la suite.

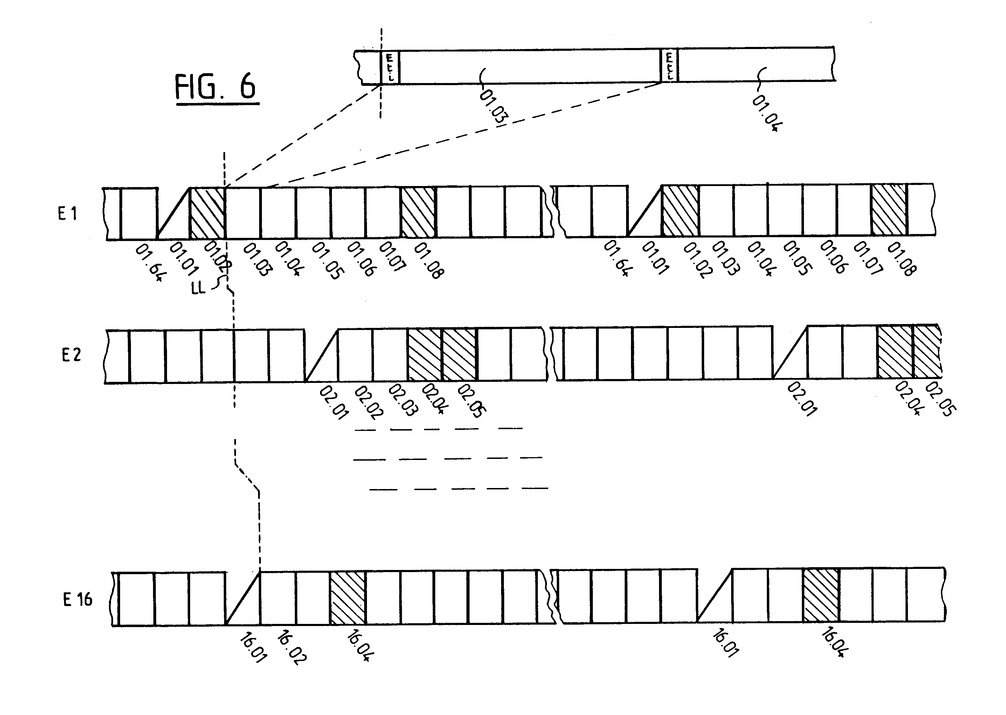

A la Fig. 6, on a représenté des suites de trames formant respectivement les multiplex E1 à E16. Chaque intervalle de temps y est repéré par deux valeurs: le rang i du multiplex auquel il appartient et son rang j dans chaque trame. Les blocs de synchronisation de trame sont représentés par des triangles; les paquets sont représentés par des carrés blancs et les voies par des carrés hachurés. De plus, on a représenté à plus grande échelle les paquets 01.03 et 01.04.

Le trajet de la ligne LL, en traits tirets, correspond aux instants auxquels les circuits C1 à C16 délivrent respectivement les 16 débuts de bloc respectifs des multiplex E1 à E16. On voit qu'il y a d'un multiplex au suivant un décalage d'un octet, qui est provoqué par le décalage d'un signal f3.i au suivant. Ces décalages entraînent un alignement diagonal des blocs. Sous une autre forme, on peut dire qu'il y a une synchronisation diagonale des blocs.

Par contre, la Fig. 6 montre que les trames des différents multiplex ont des positions aléatoires. Ainsi, le bloc de synchronisation du multiplex E1 est en avance de quatre blocs sur celui du multiplex E2, mais seulement en avance d'un bloc sur celui du multiplex E16. On verra les conséquences de cette situation dans la suite.

La Fig. 6 montre encore que les voies, telles que 01.02, 01.08, 02.04, 02.05, ... , 16.04, sont toujours à la même place dans leurs trames respectives. Par contre, d'une trame à la suivante, les paquets de même rang peuvent appartenir à des communications différentes.

A la Fig. 2b, les sorties Di(0-7) et Ni.j(0-5) des circuits d'entrée CEi sont respectivement reliées aux entrées correspondantes de la matrice de rotation d'entrée MRE dont le rôle est le même que celui de la matrice de rotation MRE montrée à la Fig. 4 du brevet EP-A-0 113 639. La matrice MRE a une entrée de commande de rotation à laquelle est appliqué un signal $\bar{e}$ qui varie cycliquement de 0 à 15 et qui identifie implicitement les multiplex entrants.

La première sortie de la matrice MRE est une sortie à 14 fils qui se décompose en une sortie Dl à huit fils et une sortie Ds à six fils. La sortie D1 delivre successivement les premiers octets des blocs des multiplex entrants et la sortie Ds les rangs Ni.j des blocs dans leurs trames. Les quinze autres sorties à huit fils D2 à D16 sont des sorties à huit fils qui délivrent respectivement les seconds octets des blocs jusqu'aux seizièmes octets des blocs. Pour chaque bloc, le $i^e$ octet est délivré, par la sortie Di, un temps d'octet avant le $(i+1)^e$ octet du bloc délivré par la sortie $D(i+1)$. On notera que les sorties D2 à D16 n'ont que huit fils sortants, ce qui veut dire que les six fils qui transmettraient le rang Ni.j ne sont pas branchés.

En pratique, les six fils de la sortie Ds ne donne que le rang du bloc dans une trame de 64 blocs, mais n'identifie pas le multiplex entrant parmi seize. C'est pourquoi, aux six fils de la sortie Ds sont associés les quatre fils du signal $\bar{e}$ identifiant les multiplex entrants, pour former un faisceau de dix fils SEP qui est relié, d'une part, à l'entrée d'adresse de la mémoire de discrimination MCE, Fig. 2a, et, d'autre part, à la première entrée d'un multiplexeur MY1, Fig. 2d, associé à la mémoire MV.

La mémoire MCE est une mémoire à accès aléatoire qui contient pour chaque bloc Ni.j une information de discrimination, soit par exemple un bit "1" si le bloc correspond à une voie et un bit "0" si le bloc correspond à un paquet. On rappelle que les paquets vides et les blocs de synchronisation de trame sont écartés à l'entrée des files FE des circuits d'entrée CEi.

L'entrée d'écriture de la mémoire de discrimination MCE est reliée, par un bus BUS, à l'unité de commande de commutation UCC qui supervise les communications, voies et paquets, traversant le commutateur et qui, en fonction des nouvelles communications à établir ou des communications à libérer, modifie, par le bus, le contenu de la mémoire MCE. Enfin, la mémoire MCE a une sortie ASYNC qui est reliée à la première entrée d'une série de seize portes ET PA1 à PA16. Autrement dit, quand l'information Ni.j qui est appliquée à l'entrée d'adresse de la mémoire MCE correspond à une voie, les premières entrées des portes PA1 à 16 sont au niveau bas, quand elle correspond à un paquet, elles sont au niveau haut.

Par ailleurs, la sortie D1 de la matrice MRE est reliée, d'une part, à l'entrée de données du circuit d'aiguillage et de conversion d'étiquette ACE, Fig. 2a, et, d'autre part, à l'entrée d'une mémoire MV1, Fig. 2d, qui fait partie de la mémoire MV. La sortie de données du circuit ACE est reliée à l'entrée d'une mémoire tampon MP1. Les sorties D2 à D16 sont respectivement reliées, par des liaisons à huit fils chacune, d'une part, aux entrées de mémoires tampons MP2 à MP16 et, d'autre part, aux entrées de mémoires tampons MV2 à MV16. L'ensemble des mémoires MP1 à MP16 forment la première mémoire tampon MP et l'ensemble des mémoires MV1 à MV16 la seconde mémoire tampon MV.

La base de temps BT comprend une source HOR de signal d'horloge locale de fréquence 2H et un compteur binaire CTS. L'entrée du compteur binaire CTS est reliée à la sortie de la source HOR, sa première sortie H délivre un signal à la fréquence octet H, et, parmi ses dix sorties suivantes BT0 à BT9, le groupe de sorties BT0 à BT3 forme ce qu'il est convenu d'appeler la liaison e, l'ensemble des sorties BT0 à BT7 forme ce qu'il est convenu d'appeler une liaison K et l'ensemble des sorties BT0 à BT9 forme ce qu'il est convenu d'appeler une liaison W. Les fréquences octet H et HE, Fig. 5, sont plésiochrones.

Le faisceau e est relié à l'entrée de commande d'un démultiplexeur d'aiguillage AIG dont l'entrée de données est au niveau haut et dont les sorties sont les seize fils f3.1 à f3.16 respectivement reliés aux circuits logiques des circuits d'entrées CE1 à CE16. Ainsi, les signaux successifs appliqués aux fils f3.1 à f3.16 font que les activations en lecture des circuits CE1 à CE16 sont séquentielles, avec un octet de décalage de l'une à la suivante.

Le circuit d'aiguillage et de conversion d'étiquette ACE comprend une mémoire à accès aléatoire MC, seize files d'attente FS1 à FS16, un démultiplexeur TR et deux multiplexeurs MFS et MGS, plus les seize portes ET PA1 à PA16. La mémoire MC a des entrées d'adresse à douze fils, dont quatre sont reliées au faisceau e et huit à la sortie D1 de la matrice MRE. Ses entrées d'écriture sont reliées, par le bus BUS, l'unité de commande de UCC et ses sorties de lecture comportent vingt-quatre fils dont huit sont reliés aux entrées de données de la mémoire MP1 et dont seize sont respectivement reliés aux secondes entrées des seize portes PA1 à PA16, à travers un registre TAMPON recevant l'horloge H.

Chaque file d attente FSi a son entrée de données reliée au faisceau K, sa sortie de données reliée à une entrée correspondante du multiplexeur MFS, son fil de commande d'écriture respectivement relié à la porte PAi correspondante, son entrée de commande de lecture reliée à une sortie correspondante du démultiplexeur TR et son fil d'indication de file vide relié à une entrée correspondante du multiplexeur MGS.

En pratique, comme déjà décrit dans le brevet EP-A-0 113 639, la mémoire MC reçoit les premiers octets de chaque bloc entrant et, en relation avec l'identité du multiplex portant le bloc, identité donnée par le faisceau e délivre en sortie une nouvelle étiquette sur les huit fils vers la mémoire MP1 et désigne la liaison sortante concernée en activant un de ses seize autres fils afin de pouvoir écrire dans la file d'attente FSi correspondante l'adresse à laquelle la nouvelle étiquette est écrite dans la mémoire MP1, cette adresse étant donnée par la liaison K, qui est reliée à la première entrée du multiplexeur MX1. Dans l'exemple de réalisation décrit, si le premier octet de bloc est une étiquette de paquet, la porte PAi correspondante est ouverte et le fonctionnement se déroule comme on vient de le mentionner, mais s'il s'agit d'un premier octet de voie la porte PAi n'est pas ouverte par la mémoire MCE et aucune adresse n'est enregistrée dans la file FSi. Egalement, dans ce dernier cas, la mémoire MC ne délivre pas de véritable nouvelle étiquette, car l'unité de commande UCC ne lui en a pas transmise. En pratique, le mot qui était présent, lors du temps d'octet précédent est tout de même écrit dans la mémoire MP1. On verra dans la suite que cela n'a aucune importance.

Chaque mémoire MPi est associée à un multiplexeur MXi et un compteur-registre ADLi, et l'ensemble de ces circuits fonctionne comme il est décrit dans le brevet EP-A-0 113 639 auquel on pourra se référer. On retiendra que les multiplexeurs MXi sont commandés par le signal d'horloge H qui au niveau haut permet l'adressage en écriture par la première entrée et au niveau bas permet l'adressage en lecture par la seconde entrée. En écriture, l'arrangement diagonal en sortie de la matrice de rotation MRE ne nécessite pas d'incrémentation d'adresse en passant d'une mémoire MPi à la mémoire MP(i + 1); en lecture, cette incrémentation est exécutée par les circuits ADLi. L'additionneur + 1 montré à la Fig. 2b n'est inséré que pour compenser le temps de traitement dans la mémoire MC.

Par ailleurs, à la mémoire MV est associée une mémoire de commande de lecture MCL dont les entrées d'adresse sont reliées au faisceau W à dix fils et l'entrée de données à l'unité de commande UCC, par le bus BUS. Ses sorties de données comprennent dix fils d'adressage, un fil de commande V/P et un fil de commande ST. La mémoire de commande de lecture MCL reçoit de l'unité de commande UCC les adresses des octets de voie qui doivent être émis sur un multiplex sortant donné à un temps d'octet déterminé par le faiscsau W. Pour chaque octet de voie à transmettre sur une jonction sortante, le fil de commande V/P est mis au niveau "1". Enfin, le fil de commande ST est mis au niveau "1" quand les jonctions sortantes doivent transmettre un bloc de synchronisation de trame.

Dans l'exemple de réalisation décrit, les blocs de synchronisation de trame sont émis en synchronisme sur toutes les jonctions sortantes.

La mémoire MV1 a son entrée d'adresse reliée à la sortie d'un multiplexeur à deux entrées MY1 dont la première entrée est reliée au faisceau SEP, dont la seconde entrée est reliée au faisceau SLP et dont l'entrée de commande reçoit l'horloge octet H. Chaque mémoire MVi, autre que la mémoire MV1, est associée à un multiplexeur à deux entrées MYi et à deux additionneurs "+1" ADVEi et ADVLi. Chaque multiplexeur MYi a sa première entrée de données reliée à la sortie de l'additionneur ADVEi et sa seconde entrée de données reliée à la sortie de l'additionneur ADVLi, son entrée de commande recevant le signal d'horloge H. Le signal H au niveau haut valide l'adressage en écriture et au niveau bas l'adressage en lecture. Les entrées des additionneurs ADVEi et ADVLi sont respectivement reliées aux entrées du multiplexeur MY(i-1).

Les entrées de données des mémoires MV1 à MV16 étant directement reliées aux sorties D1 à D16 de la matrice de rotation MRE, tous les octets de tous les blocs sont mémorisés dans les mémoires MV1 à MV16. 11 en résulte que chacune des mémoires doit avoir une capacité de 64 octets par trame multipliés par 16 multiplex entrants, soit $2^{10}$ octets. C'est pourquoi le faisceau SEP comporte 10 fils pour l'adresse d'écriture d'un octet et le faisceau SLP dix fils pour l'adresse de la lecture d'un octet. L'additionneur ADVE2 ajoute un bit à l'adresse transmise par SEP de manière que le second octet d'un bloc soit rangé dans la mémoire MV2 avec un décalage d'un octet ce qui correspond au fait que ce second octet est délivré par la matrice MRE un temps d'octet après le premier octet. Les additionneurs ADVEi suivants ont pour rôle d'effectuer les décalages suivants. Ainsi, si l'on considère la mémoire MV dans son entier, on y retrouve le même rangement "paragonal" que dans la mémoire MP.

Les additionneurs ADVLi intervenant dans la lecture des octets ont un rôle équivalent.

Les sorties de données des mémoires MPi et MVi sont respectivement reliées à deux entrées de données d'un circuit de transfert CTRi dont la sortie est reliée à l'entrée Fi de la matrice de rotation de sortie MRS.

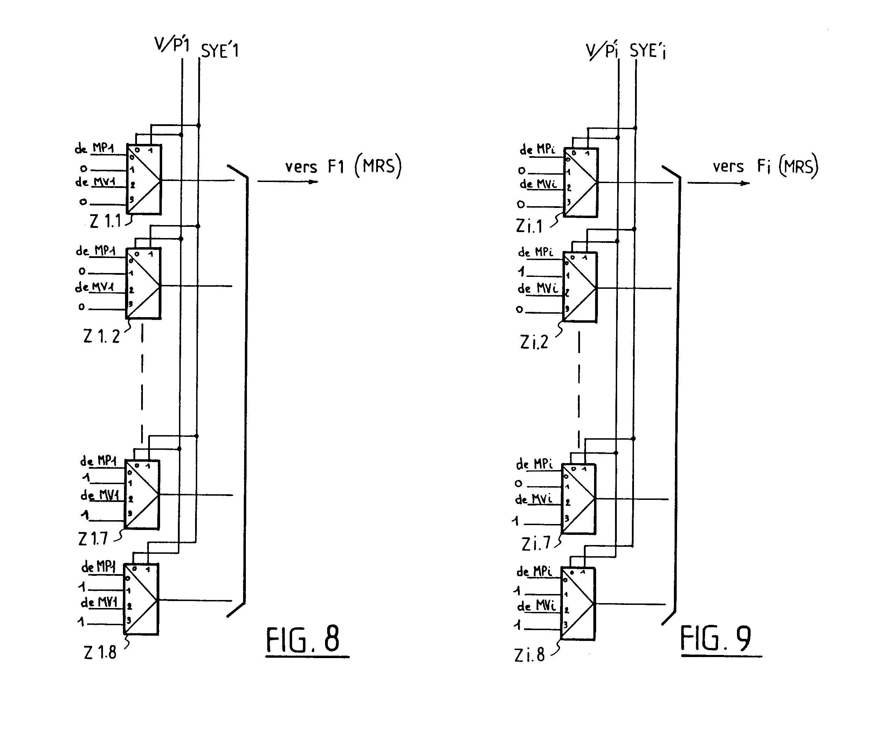

Le fil de sortie V/P de la mémoire MCL est relié, d'une part, à l'entrée d'inhibition du démultiplexeur TR et, d'autre part, à une entrée d'un circuit de commande de lecture GSL qui est montré en détail à la Fig. 7. Quand le fil V/P est au niveau "1", il inhibe la sortie du démultiplexeur TR si bien que la file d'attente FSi qui aurait été interrogée en lecture pour le compte de la jonction de sortie Si n'est pas lue.

Le circuit GSA, Fig. 7, comporte un multiplexeur MLS dont une entrée non inverseuse est reliée au fil ST provenant de la mémoire MCL et une entrée inverseuse est reliée à la sortie du multiplexeur MGS. Son entrée de commande est reliée au fil V/P. Le circuit GSA comprend encore deux registres à décalage RGV1 et RGV2 à seize étages chacun, qui reçoivent le signal d'horloge H. L'entrée de signal du registre RGV1 est relié au fil V/P et celui du registre RGV2 à la sortie du multiplexeur MLS. En pratique, les registres RGV1 et RGV2 recopient sur leurs sorties respectives V/P′ et SYE′, en les décalant au rythme de l'horloge H, les signaux V/P et SYE appliqués à leurs entrées. Ses sorties sont, suivant leur rang, respectivement reliées aux deux entrées correspondantes de seize circuits de transfert CTR1 à CTR16.

La paire de signaux V/P′ et SYE′ prend la valeur binaire 00 quand le bloc à transmettre est celui d'un paquet, 01 quand le bloc à transmettre est celui d'un paquet vide, 10 quand le bloc à transmettre est celui d'une voie, et 11 quand le bloc à transmettre est un bloc de synchronisation de trame. Cela se vérifie facilement sur le schéma de la Fig. 7. Ainsi, V/P à "1" et ST à "0", le signal SYE est à "0", ce qui entraîne le décalage de la paire 10 de transmission de voie.

Le circuit de transfert CTR1, Fig. 8, comprend huit multiplexeurs à quatre entrées Z1.1 à Z1.8 dont les deux entrées de commande sont reliées aux premières sorties respectives des registres RGV1 et RGV2. Les premières entrées des multiplexeurs Z1.1 Z1.8 sont respectivement reliées aux huit fils de sortie de la mémoire MP1, les secondes et quatrièmes entrées des multiplexeurs Z1.1 à Z1.4 sont au niveau "0" tandis que les entrées correspondantes des multiplexeurs Z1.5 Z1.8 sont au niveau "1" et les troisièmes entrées des multiplexeurs Z1.1 à Z1.8 sont respectivement reliées aux huit fils de la mémoire MV1. On comprend que le circuit de transfert CTR1 peut transmettre soit l'étiquette d'un paquet, soit le premier octet d'une voie, soit le premier octet d'un paquet vide ou d'un bloc de synchronisation de trame, ces derniers ayant la même configuration.

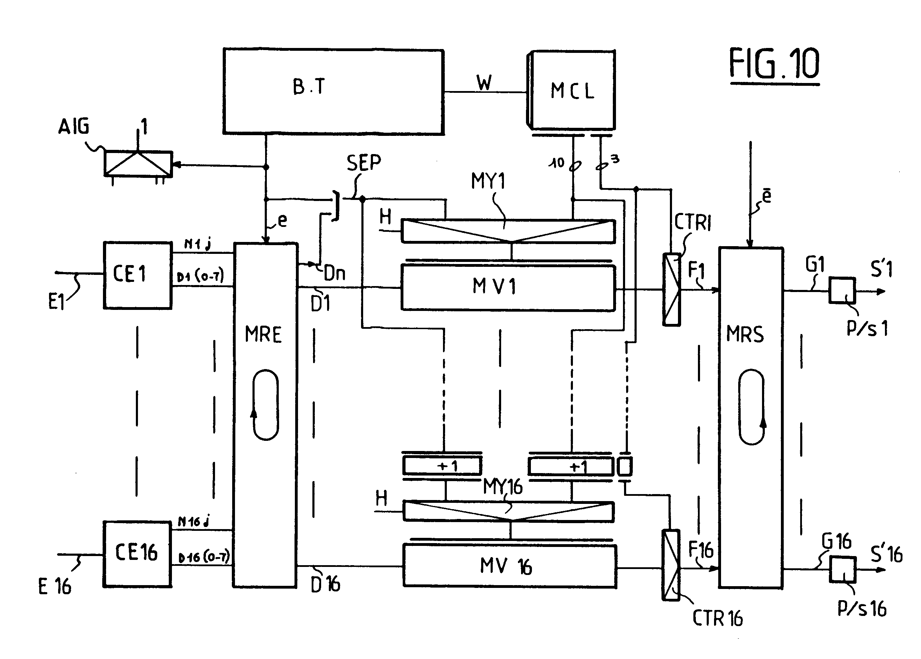

Le circuit de transfert CTRi (avec i différent de 1), Fig. 9, comprend aussi huit multiplexeurs à quatre entrées Zi.1 à Zi.8 dont les deux entrées de commande sont reliées aux $i^e$ sorties des registres RGV1 et RGV2. Les premières et les troisièmes entrées de tous les multiplexeurs sont respectivement reliées aux sorties correspondantes des mémoires MPi et MVi. Les secondes entrées des multiplexeurs Zi.1, Zi.3, Zi.5 et Zi.7 sont au niveau "0" tandis que celles des autres sont au niveau "1". Les quatrièmes entrées des multiplexeurs Zi.1, Zi.2, Zi.5 et Zi.6 sont au niveau "0" tandis que celles des autres sont au niveau "1".

Le transfert des paquets de la mémoire MP et des blocs de voie de la mémoire MV vers la matrice de sortie MRS est commandée, en ce qui concerne la mémoire MP par le démultiplexeur TR qui reçoit le mot e lequel sert à sélecter un file d'attente FSi parmi seize, et en ce qui concerne la mémoire MV, par le mot d'adresse transmis par le faisceau W à la mémoire MCL, le faisceau W incluant l'information e. Il apparaît donc qu'à l'instant d'exploration d'une jonction de sortie Si, il y a synchronisme dans le fonctionnement de TR et de MCL. Le conflit entre les deux traitements: lecture de MP ou de MV, est réglé par le signal V/P qui peut inhiber le fonctionnement du multiplexeur TR. A noter que, dans W, on n'a pas inversé le faisceau e car la mémoire MCL est supposée faire l'inversion implicitement. L'insertion d'un bloc de synchronisation de trame est traitée comme l'insertion d'une voie, sauf que le motif de ce bloc est câblé dans les circuits de transfert CTRi.

La matrice de rotation de sortie MRS remet en série en les aiguillant, en conformité avec sa commande e, la suite des octets parallèles des blocs. Enfin, les convertisseurs parallèle-série p/si sérialisent les octets de façon à délivrer des multiplex ayant une structure équivalent à celui de la Fig. 1.

Le commutateur de la Fig. 10 comprend, comme celui des Figs. 2a à 2d, des circuits d'entrée CEI à CE16, une base de temps BT, une matrice de rotation d'entrée MRE, une mémoire tampon MV, une matrice de rotation de sortie MRS, des convertisseurs parallèle-série p/s1 à p/s16, et une mémoire de commande de lecture MCL. Les seize jonctions E′1 à E′16 portent chacune un multiplex temporel organisé en trame, comme celui de la Fig. 1, mais dans lequel tous les intervalles de temps, sauf ceux portant les blocs de synchronisation de trame, sont réservés à des voies. Autrement dit, les multiplex des jonctions E′1 à E′16 ne

transportent pas de paquet.

Chaque circuit d'entrée CEi est identique à celui qui est montré à la Fig. 4 et délivre les octets de voie en parallèle, ainsi que les rangs des voies dans chaque trame. Un circuit d'aiguillage AIG assure la sortie diagonale des blocs de voie qui sont respectivement appliqués aux entrées de la matrice de rotation MRE.

La matrice MRE convertit la structure diagonale en structure paragonale. Elle a seize sorties D1 à D16 délivrant respectivement les octets suivant leur rang dans chaque bloc, plus une sortie Dn, associée à la sortie D1, qui délivre le rang du bloc dans la trame. L'entrée de commande de la matrice MRE reçoit aussi l'information e de la base BT.

La mémoire MV se décompose en seize mémoires élémentaires MV1 à MV16 dont les entrées d'adresse sont respectivement reliées aux sorties de seize multiplexeurs MY1 à MY16.

La sortie Dn, délivrant le rang Ni.j du bloc, est associée à l'information e pour déterminer l'adresse d'écriture du premier octet du bloc dans la première mémoire élémentaire MV1 de la mémoire MV. En pratique, cette information d'adresse est appliquée à la première entrée d'un multiplexeur MY1. Entre l'entrée d'adresse d'écriture du multiplexeur MY1 et celle du multiplexeur MY2, non montré, on prévoit un additionneur +1, comme dans le commutateur des Figs. 2a à 2d.

La mémoire de commande de lecture MCL est adressée par le faisceau W sortant de la base de temps BT et délivre des adresses de lecture dans la mémoire MV à l'entrée d'adresse de lecture du multiplexeur MY1. Pour la lecture comme pour l'écriture, entre les multiplexeurs MYi et MY(i+1), on prévoit un additionneur +1.

Les sorties des mémoires MV1 à MV16 sont respectivement reliées aux premières entrées de seize circuits de transfert CRT1 à CTR16 qui sont identiques aux circuits portant les mêmes références dans le commutateur des Figs 2a à 2d. Toutefois, dans la variante de la Fig. 10, comme il n'y a pas de paquets à commuter, mais uniquement des voies, les fils permettant de transmettre des paquets ou des paquets vides peuvent être isolés. Dans les circuits de transfert, on garde les fils provenant des mémoires MV1 à MV16 et ceux qui permettent la synthèse du bloc de synchronisation de trame.

Pour sélecter les données à transmettre par les circuits de transfert, un fil de commande est prévu entre la sortie de la mémoire de commande de lecture MCL et les circuits de transfert, en prévoyant un retard entre un circuit CTRi et le suivant.

Les sorties des circuits de transfert CTR1 à CTR16 sont reliées aux entrées F1 à F16 de la mémoire de rotation de sortie MRS dont les sorties G1 à G16 sont respectivement reliées aux convertisseurs p/sl à p/s16 qui délivrent sur les jonctions S'1 à S'16 des multiplex ne comportant également que des blocs de voie en plus des blocs de synchronisation de trame.

L'entrée de commande de la matrice MRS reçoit l'information e et celles des multiplexeurs MY1 à MY16 reçoivent l'horloge octet H.

En variante, dans le cas où des intervalles de temps risquent de ne pas être occupés par des blocs de voie, les circuits de transfert CTR1 à CTR16 peuvent insérer des motifs de paquets vides. Il faut alors deux fils entre la mémoire MCL et les circuits de transfert.

## Revendications

1. Système de commutation de multiplex temporels hybrides, chaque multiplex temporel hybride entrant (Ei) et sortant (Si) étant formé de trames dont les intervalles de temps de longueur fixe transportent chacun un bloc de mot formant soit un paquet, soit une voie, sauf le premier intervalle de temps de chaque trame qui contient un bloc de synchronisation de trame, les multiplex entrant (Ei) étant appliqués à un commutateur temporel de paquets utilisant une conversion paragonale et comportant un circuit d'entrée (CEi) par multiplex entrant (Ei), une matrice de rotation d'entrée (MRE), une mémoire tampon de paquets (MP), des circuits de transfert (CTRi), une matrice de rotation de sortie (MRS), une base de temps (BT), une mémoire de traduction d'étiquette (MC) et des files de mémorisation (FSi) des adresses d'écriture des paquets dans la mémoire tampon (MP) qui sont chacune associée à un multiplex de sortie (Si), chaque circuit d'entrée (CEi) comprenant un circuit de synchronisation (SY) capable de reconnaître la présence d'un bloc de synchronisation de trame, une file (FE) et un convertisseur série-parallèle de mot (s/p), caractérisé en ce que le circuit de synchronisation (SY) de chaque circuit d'entrée (CEi) délivre, à la file (FE), le rang (j) de chaque intervalle de temps dans une trame, cette information de rang (j) étant transmise des circuits d'entrée à la matrice de rotation d'entrée (MRE) laquelle a une sortie (Ds) associée à sa première sortie (D1) et délivrant ladite information de rang (j) laquelle avec l'information d'identification (e) du multiplex entrant forme une information d'identité de bloc (Ni.j) qui est appliquée à l'entrée d'adresse d'une mémoire de discrimination, programmable (MCE) dont la sortie est reliée à des moyens de bloquage (PA1 à PA16) des signaux de validation délivrés par la première mémoire de traduction d'étiquette (MC) aux files de mémorisation d'adresses (FSi), les sorties (D1 à D16) de la matrice de rotation d'entrée (MRE) étant encore reliées à des secondes mémoires tampons correspondantes (MV1 à MV16) dont les entrées d'adresse d'écriture reçoivent l'information d'identité de bloc (Ni.j), dont les entrées d'adresse de lecture sont reliées à la sortie d'une mémoire de commande de lecture (MCL) et dont les sorties sont reliées aux entrées correspondantes des circuits de transfert (CTR1 à CTR16), l'entrée d'adresse de la troisième mémoire de commande de lecture (MCL) recevant de la base de temps (BT) des informations séquentielles (W) et délivrant encore deux signaux (V/P et ST) qui sont appliqués à une circuit de commande de commutation (GSA) des circuits de transfert (CTR1 à CTR16) et dont le premier (V/P) est relié à des moyens d'inhibition de la lecture des moyens de mémorisation (FS1 à FS16).

2. Système de commutation de multiplex temporels hybrides, chaque multiplex temporel hybride entrant (Ei) et sortant (Si) étant formé de trames dont les intervalles de temps de longueur fixe transportent chacun un bloc de mots formant soit des paquets, soit des voies, sauf le premier intervalle de temps d'une trame qui contient un bloc de synchronisation de trame, chaque multiplex entrant (Ei) étant appliqué, d'une part, à un circuit d'entrée (CEi) comprenant un circuit de synchronisation (Sy) capable de reconnaître les blocs de synchronisation de trame, une file (FE) et un convertisseur série-parallèle (s/p) de mot dont la sortie est reliée à la file (FE) dont la sortie constitue la sortie du circuit d'entrée (CEi), les sorties de circuits d'entrée (CE1 à CE16) étant reliées aux entrées d'une matrice de rotation d'entrée (MRE) dont les sorties (D1 à D16) sont reliées, sauf la première (D1), à des premières mémoires tampons correspondantes (MP2 à MP16), ladite première sortie (D1) étant reliée aux entrées d'adresse d'une première mémoire de commande, programmable à accès aléatoire (MC), le système de commutation comprenant encore une base de temps (BT) délivrant séquentiellement, au rythme de l'horloge octet, l'information d'identification (e) des multiplex entrants aux entrées de lecture des files (FE) des circuits d'entrée (CE1 à CE16), à l'entrée de commande de la matrice de rotation d'entrée (MRE) et aux autres entrées d'adresse de ladite première mémoire de commande (MC), la sortie de données de ladite première mémoire de commande (MC) délivrant un mot en substitution du mot reçu de la première sortie (D1) de la matrice de rotation d'entrée à une première mémoire tampon (MP1), et délivrant des signaux de validation d'écriture vers des files de memorisation (FS1 à FS16) respectivement affectées aux multiplex de sortie (S1 à S16) et recevant de la base de temps (BT) les adresses (K) des mots mémorisés dans ladite première mémoire (MP1), les sorties desdites premières mémoires (MP1 à MP16) étant reliées à des entrées correspondantes de circuits de transfert (CTR1 à CTR16) dont les sorties sont reliées aux entrées correspondantes d'une matrice de rotation de sortie (MRS) dont les sorties délivrent, par l'intermédiaire de convertisseurs parallèle-série (p/s1 à p/s16), les multiplex temporels sortants (S1 à S16), la base de temps (BT) délivrant également l'information d'identification (e) des multiplex sortants aux entrées de lecture desdites files de mémorisation (FS1 à FS16) et à l'entrée de commande de la matrice de rotation de sortie (MRS), les sorties des files de mémorisation (FS1 à FS16) délivrant les adresses de lecture dans les premières mémoires (MP1 à MP16), caractérisé en ce que le circuit de synchronisation (SY) de chaque circuit d'entrée (CEi) délivre, à la file (FE), le rang (j) de chaque intervalle de temps dans une trame, cette information de rang (j) étant transmise des circuits d'entrée à la matrice de rotation d'entrée (MRE) laquelle a une sortie de rang (Ds) associé à sa première sortie (D1) et délivrant ladite information de rang (j) laquelle avec l'information d'identification (e) du multiplex entrant forme une information d'identité de bloc (Ni.j) qui est appliquée à l'entrée d'adresse d'une seconde mémoire de discrimination, programmable (MCE) dont la sortie est reliée à des moyens de bloquage (PA1 à PA16) des signaux de validation délivrés par la première mémoire de commande (MC), les sorties (D1 à D16) de la matrice de rotation d'entrée (MRE) étant encore reliées à des secondes mémoires tampons correspondantes (MV1 à MV16) dont les entrées d'adresse d'écriture reçoivent l'information d'identité de bloc (Ni.j), dont les entrées d'adresse de lecture sont reliées à la sortie d'une troisième mémoire de commande (MCL) et dont les sorties sont reliées aux entrées correspondantes des circuits de transfert (CTR1 à CTR16), l'entrée d'adresse de la troisième mémoire de commande (MCL) recevant de la base de temps (BT) des informations séquentielles (W) et délivrant encore deux signaux de commande (V/P et ST) qui sont appliqués à une circuit de commande de commutation (GSA) des circuits de transfert (CTR1 à CTR16) et dont le premier (V/P) est relié à des moyens d'inhibition de la lecture des files de mémorisation (FS1 à FS16).

3. Système de commutation suivant la revendication 1 ou 2 dans lequel, en cas d'absence de paquet à transmettre, chaque intervalle de temps alloué aux paquets est rempli par des données formant un paquet vide, caractérisé en ce que chaque paquet vide comprend un premier octet dont la structure est identique à celle d'un bloc de synchronisation de trame, mais interdite pour les autres paquets, le contenu du reste du paquet vide étant distinct de celui du bloc de synchronisation de trame, le circuit de synchronisation (Sy) étant capable de reconnaître un paquet vide et, en cas de reconnaissance d'un paquet vide ou d'un bloc de synchronisation de trame, délivrant un signal (PP) interdisant leur écriture dans la file (FE).

4. Système de commutation suivant l'une des revendications 1 à 3, caractérisé en ce que le circuit de commande de commutation (GSA) est un circuit de traitement logique qui, recevant les deux signaux de commande (V/P et ST) de la troisième mémoire de commande et un signal d'état de file vide d'une des files de mémorisation (FS1 à FS16), fait commuter les circuits de transfert (CTR1 à CTR16) de manière qu'ils relient respectivement aux entrées correspondantes de la matrice de rotation de sortie (MRS), soit les premières mémoires tampons (MP1 à MP16), soit les secondes mémoires tampons (MV1 à MV16), soit des premières mémoires internes aux circuits de transfert et contenant respectivement les octets formant un paquet vide, soit des secondes mémoires internes aux circuits de transfert contenant respectivement les octets d'un bloc de synchronisation de trame.

5. Système de commutation suivant l'une des revendications 1 à 4, dans lequel les multiplex temporels ne transportent que des voies, caractérisé en ce que les circuits de transfert (CTR1 à CTR16) sont des multiplexeurs commandés par un fil de commande provenant de la mémoire de commande de lecture (MCL), une entrée de chaque circuit de transfert étant reliée à une seconde mémoire tampon respectivement et sa seconde entrée synthétisant le bloc de synchronisation de trame.

6. Système de commutation suivant la revendication 5, caractérisé en ce que les circuits de transfert (CTR1 à CTR16) ont trois entrées, la mémoire de commande de lecture (MCL) leur délivrant un troisième signal de commande pour le cas où aucune voie n'est à transmettre dans un intervalle de temps, les troisièmes entrées des circuits de transfert permettant de synthétiser la configuration d'un paquet vide.

**Claims**

1. A hybrid time multiplex switch system, each incoming (Ei) and outgoing (si) hybrid multiplex being formed of frames the intervals of time of fixed length of which each transport a word block forming either a packet or a track except the first interval of time of each frame which contains a frame synchronization block, the incoming multiplex (Ei) being applied to a time switch of packets using a paragonal conversion and comprising an input circuit (CEi) by incoming multiplex (Ei), a rotation matrix input (MRE), a packet buffer memory (MP), transfer circuits (CTRi), a rotation matrix output (MRS), a time base (BT), a label translation memory (MC) and memorization files (FSi) of the packet writing addresses in the buffer memory (MP) which are each associated with an output multiplex (Si), each input circuit (CEi) comprising a synchronization circuit (SY) capable of recognizing the presence of a frame synchronization block, a file (FE) and a series-parallel word converter (S/P), characterised in that the synchronization circuit (SY) of each input circuit (CEi) delivers to the file (FE), the rows (j) of each time interval in a frame, this row information (j) being transmitted from the input circuits to the rotation matrix input (MRE) which has an output (DS) associated with its first output (D1) and delivering the said row information (j) which with the identification information (e) of the incoming multiplex forms a block identity information (Ni.j) which is applied to the address input of a programmable discrimination memory (MCE) the output of which is connected to blocking means (PA1 to PA16) of the validation signals delivered by the first label translation memory (MC) to the addresses memorization files (FSi), the outputs (D1 to D16) of the rotation matrix input (MRE) being also connected to corresponding second buffer memories (MV1 to MV16) the writing address inputs of which receive the block identity information (Ni.j), the reading address inputs of which are connected to the output of a reading control memory (MCL) and the outputs of which are connected to the corresponding inputs of the transfer circuits (CTR1 to CTR16), the address input of the third reading control memory (MCL) receiving from the time base (BT) sequential information (W) and delivering also two signals (V/P and ST) which are applied to a switch control circuit (GSA) of the transfer circuits (CTR1 to CTR16) and the first (V/P) of which is connected to reading inhibition means of the memorization means (FS1 to FS16).

2. A hybrid time multiplex switch system, each incoming (Ei) and outgoing (Si) hybrid time multiplex being formed by frames the intervals of time of fixed length of which each transport a word block forming either packets or tracks except the first interval of time of a frame which contains a frame synchronization block, each incoming multiplex (Ei) being applied, on the one hand, to an input circuit (CEi) comprising a synchronization circuit (Sy) capable of recognizing the frame synchronization blocks, a file (FE) and a word series-parallel converter (S/P) the output of which is connected to the file (FE) the output of which constitutes the output of the input circuit (CEi), the outputs of input circuits (CE1 to CE16) being connected to the inputs of a rotation matrix input (MRE) the outputs (D1 to D16) of which are connected, except the first (D1) to corresponding first buffer memories (MP2 to MP16), the said first output (D1) being connected to the address inputs of a first control memory programmable with random access (MC) the switch system comprising also a time base (BT) delivering sequentially at the rhythm of the octet clock the identification information (e) of the incoming multiplexes to the reading inputs of the files (FE) of the input circuits (CE1 to CE16), to the control input of the input rotation matrix (MRE) and to the other address inputs of the said first control memory (MC), the data output of the said first control memory (MC), delivering a word in substitution of the word received from the first output (D1) of the input rotation matrix to a first buffer memory (MP1) and delivering writing validation signals to the memorization files (FS1 to FS16) respectively allocated to the output multiplexes (S1 to S16) and receiving from the time base (BT) the addresses (K) of the words memorized in the said first memory (MP1), the outputs of the said first memories (MP1 to MP16) being connected to corresponding inputs of transfer circuits (CTR1 to CTR16) the outputs of which are connected to the corresponding inputs of a rotation matrix output (MRS) the outputs of which deliver through parallel-series converters (p/s1 to p/s16) the outgoing time multiplexes (S1 to S16), the time base (BT) delivering likewise the identification information (e) of the outgoing multiplexes to the reading inputs of the said memorization files (FS1 to FS16) and to the control input of the output rotation matrix (MRS), the outputs of the memorization files (FS1 to FS16) delivering the reading addresses in the first memories (MP1 to MP16), characterised in that the synchronization circuit (SY) of each input circuit (CEi) delivers to the file (FE) the row (j) being transmitted from the input circuits to the input rotation matrix (MRE) which has a row output (Ds) associated with its first output (D1) and delivering the said row information (j) which with the identification information (e) of the incoming multiplex forms a block identity information (Ni.j) which is applied to the address input of a programmable second discrimination memory (MCE) the output of which is connected to blocking means (PA1 to PA16) of the validation signals delivered by the first control memory (MC), the outputs (D1 to D16) of the rotation matrix input (MRE) being also connected to corresponding second buffer memories (MV1 to MV16) the writing address inputs of which receive the block identity information (Ni.j) the reading address inputs of which are connected to the output of a third control memory (MCL) and the outputs of which are connected to the corresponding inputs of the transfer circuits (CTR1 to CTR16), the address input of the third control memory (MCL) receiving from the time base (BT) sequential information (W) and delivering also two control signals (V/P and ST) which are applied to a switch control circuit (GSA) of the transfer circuits (CTR1 to CTR16) and the first (V/P) of which is connected to inhibition means of the reading of the memorization files (FS1 to FS16).

3. Switch system according to claim 1 or 2, in which in case of absence of packet to be transmitted each interval of time allocated to the packets if filled by data forming an empty packet, characterised in that each empty packet comprises a first octet the structure of which is identical with that of a frame synchronization block but for the other packets prohibits the contents of the rest of the empty packet being separate from that of the frame synchronization block, the synchronization circuit (Sy) being capable of recognizing an empty packet and in case of recognition of an empty packet or of a frame synchronisation block, delivering a signal (PP) prohibiting their writing in the file (FE).

4. A switch system according to one of the claims 1 to 3, characterised in that the switch control circuit (GSA) is a logical treatment circuit which receiving the two control signals (V/P and ST) of the third control memory and a signal of state of empty file from one of the memorization files (FS1 to FS16) causes the transfer circuits (CTR1 to CTR16) to switch so that they connect respectively to the corresponding inputs of the rotation matrix output (MRS) either the first buffer memories (MP1 to MP16) or the second buffer memories (MV1 to MV16) or from the first internal memories to the transfer circuits and containing respectively the octets forming an empty packet or from second internal memories to the transfer circuits containing respectively the octets of a frame synchronization block.

5. A switch system according to one of the claims 1 to 4, in which the time multiplexes transport only tracks, characterised in that the transfer circuits (CTR1 to CTR16) are multiplexers controlled by a control wire coming from the reading control memory (MCL), one input of each transfer circuit being connected to a second buffer memory respectively and its second input synthesizing the frame synchronization block.

6. A switch system according to claim 5, characterised in that the transfer circuits (CTR1 to CTR16) have three inputs, the reading control memory (MCL) delivering to them a third control signal for the case where no track is to be transmitted in an interval of time, the third inputs of the transfer circuits permitting of synthesizing the configuration of an empty packet.

**Patentansprüche**

1. Vermittlungssystem für hybride Zeitmultiplexe, bei dem jedes ankommende (Ei) und jedes abgehende (Si) hybride Zeitmultiplex durch Rahmen gebildet ist, in dem Zeitintervalle fester Dauer je einen Block von Worten enthalten, die entweder ein Paket oder einen Kanal bilden, mit Ausnahme des ersten Zeitintervalls jedes Rahmens, der einen Rahmen-Synchronisierblock enthält, wobei die ankommenden Multiplexe (Ei) einem zeitlichen Umschalter für die Pakete zugeführt werden, der mit einer paragonalen Konversation arbeitet und eine Eingangsschaltung (CEi) für die ankommenden Multiplexe (Ei), eine Rotations-Eingangsmatrix (MRE), einen Paket-Pufferspeicher (MP), Übertragungsschaltungen (CTRi), eine Rotations-Ausgangsmatrix (MRS), eine Zeitbasis (BT), einen Speicher für die Übertragung der Adressen (MC) und Speicherleitungen (FSi) für die Schreibadressen der Pakete in den ersten Pufferspeicher (MP) enthält, die jede einem Multiplexausgang (Si) zugeordnet sind, wobei jeder Schaltungseingang (CEi) eine Synchronisierschaltung (SY), die die Anwesenheit eines Synchronisierblocks für einen Rahmen erkennen kann, eine Reihe (FE) und einen Serien/Parallel-Umsetzer für die Worte (s/p) enthält, **dadurch gekennzeichnet,** daß die Synchronisierschaltung (SY) jeder Eingangsschaltung (CEi) an die Reihe (FE) die Ordnungszahl (j) jedes Zeitintervalls in einem Rahmen liefert, wobei die Information über die Ordnungszahl (j) von den Eingangsschaltungen zu der Rotations-Eingangsmatrix (MRE) übertragen wird, die einen Ausgang (Ds) aufweist, der mit ihrem ersten Ausgang (D1) verbunden ist und die Information über die Ordnungszahl (j) liefert, die mit der ankommenden Indentifikations-Information (e) des Multiplex eine Identifikations-Information für einen Block (Ni.j) bildet, die dem Adreßeingang eines programmierbaren Diskriminations-Speichers (MEC) zugeführt wird, dessen Ausgang mit den Blockiermitteln (PA1 - PA16) der Gültigkeitsignale verbunden ist, die von dem ersten Adressen-Übersetzungsspeicher (MC) den Speicher-Adreßleitungen (FSi) zugeführt werden, wobei die Ausgänge (D1 - D16) der Eingangs-Rotationsmatrix (MRE) außerdem mit den zweiten korrespondierenden Pufferspeichern (MV1 - MV16) verbunden sind, deren Eingangs-Schreibadressen die Identifikations-Information des Blockes (Ni.j) empfangen, deren Eingangs-Leseadressen mit dem Ausgang eines Lese-Steuerspeichers (MCL) verbunden sind und deren Ausgänge mit den entsprechenden Eingängen der Übertragungsschaltungen (CTR1 - CTR16) verbunden sind, wobei der Adreßeingang des dritten Steuer-Lesespeichers (MCL) von der Zeitbasis (BT) sequentielle Informationen (W) erhält und außerdem zwei Signale (V/P und ST) liefert, die einer Schaltung zur Steuerung der Umschaltung (GSA) der Übertragungsschaltungen (CTR1 - CTR16) zugeführt werden und von denen der erste (V/P) mit Lese-Verhinderungsmitteln der Speichermittel (FS1 - FS16) verbunden ist.

2. Vermittlungssystem für hybride Zeitmultiplexe, bei denen jedes ankommende (Ei) und abgehende (Si) hybride Zeitmultiplex aus Rahmen besteht, in denen Zeitintervalle fester Dauer je einen Block aus Wörtern enthalten, die entweder Pakete oder Kanäle bilden, mit Ausnahme eines ersten Zeitintervalls eines Rahmens, der einen Rahmen-Synchronisierblock enthält, wobei jedes ankommende Multiplex (Ei) einerseits einer Eingangsschaltung (CEi) zugeführt wird, die eine Synchronisierschaltung (Sy), die die Synchronisierblöcke des Rahmens erkennen kann, eine Leitung (FE) und einen Serien/Parallel-Umsetzer (s/p) für die Worte enthält, dessen Ausgang mit der Leitung (FE) verbunden ist,

deren Ausgang den Ausgang der Eingangsschaltung (CEi) darstellt, wobei die Ausgänge der Eingangsschaltungen (CE1 - CE16) mit den Eingängen einer Rotations-Eingangsmatrix (MRE) verbunden sind, deren Ausgänge (D1 - D16) mit Ausnahme des ersten (D1) mit entsprechenden ersten Pufferspeichern (MP2 - MF16) verbunden sind, daß der erste Ausgang (D1) mit den Adreßeingängen eines ersten, auf Zufallszugriff programmierbaren Speichers (MC) verbunden ist, wobei das Vermittlungssystem außerdem eine Zeitbasis (BT) enthält, die sequentiell im Rhythmus des Datenwortes die Identifiaktions-Information (e) der ankommenden Multiplexe zu den Eingängen der Leseleitungen (FE) der Eingangschatungen (CE1 - CE16), dem Steuereingang der Rotations-Eingangsmatrix (MRE) und den übrigen Adreßeingängen des ersten Steuerspeichers (MC) zuführen, wobei der Datenausgang des ersten Steuerspeichers (MC) als Ersatz für das von dem ersten Ausgang (D1) der Rotations-Eingangsmatrix empfangene Wort ein Wort an einen ersten Pufferspeicher (MP1) liefert, wobei Schreib-Gültigkeitssignale zu den Speicherleitungen (FS1 - FS16) geliefert werden, die entsprechend den Ausgangsmultiplexen (S1 - S16) zugeordnet sind und von der Zeitbasis (BT) die Adressen (K) der in dem ersten Speicher (MP1) gespeicherten Wörter empfangen, wobei die Ausgänge der ersten Speicher (MP1 - MP16) mit entsprechenden Eingängen der Übertragungsschaltungen (CTR1 - CTR16) verbunden sind, deren Ausgänge mit entsprechenden Eingängen einer Rotations-Ausgangsmatrix (MRS) verbunden sind, deren Ausgänge über die Parallel/Serien-Umsetzer (p/s1 - p/s16) die abgehenden Zeitmultiplexe (S1 - S16), die Zeitbasis (BT), die außerdem die Identifikations-Information (e) der abgehenden Multiplexe den Leseeingängen der Speicherleitungen (FS1 - FS16) und dem Steuereingang der Rotations-Ausgangsmatrix (MRS) zuführt, wobei die Ausgänge der Speicherleitungen (FS1 - FS16) die Leseadressen in den ersten Speichern (MP1 - MP16) liefern, **dadurch gekennzeichnet,** daß die Synchronisierschaltung (SY) jeder Eingangsschaltung (CEi) an der Leitung (FE) die Ordnungszahl (j) jedes Zeitintervalls eines Rahmens liefert, wobei diese Information über die Ordnungszahl (j) von den Eingangsschaltungen auf die Eingangs-Rotationsmatrix (MRE) übertragen wird, die einen Ausgang (Ds) für die Ordnungszahl aufweist, der seinem ersten Ausgang (D1) zugeordnet ist und die Information über die Ordnungszahl (j) liefert, die mit der Identifikations-Information (e) des ankommenden Multiplex eine Information für die Identität des Blockes (Mi.j) bildet, die dem Adreßeingang eines zweiten, programmierbaren Diskriminations-Speichers (MCE) zugeführt wird, dessen Ausgang mit den Blokkiermitteln (PA1 - PA16) der Gültigkeits-Signale verbunden ist, die von dem ersten Steuerspeicher (MC) geliefert werden, wobei die Ausgänge (D1 - D16) der ersten Eingangs-Rotationsmatrix (MRE) außerdem mit den entsprechenden zweiten Pufferspeichern (MV1 - MV16) verbunden sind, deren Eingänge für die Schreibadressen die Information über die Identität des Blockes (Ni.j) empfangen, deren Eingänge für die Leseadressen mit dein Ausgang eines dritten Steuerspeichers (MCL) verbunden sind und deren Ausgänge mit entsprechenden Eingängen der Übertragungsschaltungen (CTR1 -CTR16) verbunden sind und wobei der Adreßeingang des dritten Steuerspeichers (MCL) die Zeitbasis (BT) der sequentiellen Informationen (W) enthält und außerdem zwei Steuersignale (V/P und ST) liefert, die einer Steuerschaltung für die Vermittlung (GSA) der Übertragungsschaltungen (CTR1 - CTR16) zugeführt werden und von denen der erste (V/T) mit Lese-Verhindungsmitteln der Speicherleitungen (FS1 - SF16) verbunden ist.

3. Vermittlungssystem nach Anspruch 1 oder 2, in dem bei Abwesenheit eines zu übertragenden Paketes jedes den Paketen zugeordnete Zeitintervall durch Daten aufgefüllt wird, die ein leeres Paket bilden, **dadurch gekennzeichnet,** daß jedes leere Paket ein erstes Datenwort enthält, dessen Aufbau mit dem des Synchronisierblockes für den Rahmen identisch ist, aber für die übrigen Pakete gesperrt ist, wobei der Inhalt des Restes des leeren Paketes von dem des Synchronisierblockes des Rahmens abweicht und die Synchronisierschaltung (Sy) in der Lage ist, ein leeres Paket zu erkennen, und bei der Erkennung eines leeren Paketes oder eines Synchronisierblokkes für einen Rahmen ein Signal (PP) liefert, das ihr Einschreiben in die Leitung (FE) verbietet.

4. Vermittlungssystem nach einem der Ansprüche 1 - 3, **dadurch gekennzeichnet,** daß die Steuerschaltung für die Vermittlung (GSA) eine Schaltung mit logischem Verhalten ist, die bei Empfang der beiden Steuersignale (V/P und ST) von dem dritten Steuerspeicher und eines Zustandssignals für eine leere Leitung einer der Speicherleitungen (FS1 - FS16) eine Umschaltung der Übertragungsschaltungen (CTR1 - CTR16) derart bewirkt, daß sie sich jeweils auf die entsprechenden Eingänge der Rotations-Ausgangsmatrix (MRS) beziehen, seien es die ersten Pufferspeicher (MP1 - MP16), seien es die zweiten Pufferspeicher (MV1 - MV16), seien es erste Speicher innerhalb der Übertragungsschaltungen, die entsprechend die ein leeres Paket bildenden Datenwörter enthalten, seien es die zweiten Speicher innerhalb der Übertragungsschaltungen, die entsprechend die Datenwörter eines Synchronisierblockes des Rahmens enthalten.

5. Vermittlungssystem nach einem der Ansprüche 1 - 4, in dem die Zeitmultiplexe nur Kanäle enthalten, **dadurch gekennzeichnet,** daß die Übertragungsschaltungen (CTR1 - CTR16) Multiplexer sind, die durch eine Steuerleitung gesteuert sind, die von dein ersten Lese-Steuerspeicher (MCL) kommt, wobei ein Eingang jeder Übertragungsschaltung mit einem entsprechenden zweiten Pufferspeicher verbunden ist und sein zweiter Eingang den Synchronisierblock des Rahmens synthetisch herstellt.

6. Vermittlungssystem nach Anspruch 5, **dadurch gekennzeichnet,** daß die Übertragungsschaltungen (CTR1 - CTR16) drei Eingänge enthalten und daß der Lese-Steuerspeicher (MCL) ihnen ein drittes Steuersignal für den Fall liefert, daß in dem Zeitintervall kein Kanal zu übertragen ist, und daß die dritten Eingänge der Übertragungsschaltungen eine synthetische Zusammensetzung des Aufbaus eines leeren Paketes ermöglichen.

EP 0 284 534 B1

| IT64 | IT1 | IT2 | IT3 | IT4 | IT5 |
|---|---|---|---|---|---|

| | Q F | Eti | Q F | Z | Eti |

SYNCHRONISATION TRAME

PAQUET

PAQUET VIDE $\zeta$ C

VOIE $\zeta$ D

INTERVALLE DE TEMPS

## FIG. 1

ST

de MGS

SYE

V/P

RGV 1

1 2 ........ 16

V/P'

RGV 2

1 2 ........ 16

SYE'

## FIG. 7

FIG.2a

FIG.2b

FIG.2c

EP 0 284 534 B1

EP 0 284 534 B1

| 2a |
|---|
| 2b | 2c |
| 2d |

FIG. 3

FIG. 2d

BUS

MCL

SEP

D16

D2

D1

W

ST

SEP

SLP

10

MY1

H

MV1

MV

+1  +1

MY2

H

MV2

+1  +1

MY16

H

MV16

FIG. 4

EP 0 284 534 B1

FIG. 5

EP 0 284 534 B1

FIG. 6

V/P'1  SYE'1

de MP1
0
de MV1
0
Z 1.1

0 1
1
2
3

vers F1 (MRS)

de MP1
0
de MV1
0
Z 1.2

0 1
1
2
3

de MP1
1
de MV1
1
Z 1.7

0 1
1
2
3

de MP1
1
de MV1
1
Z 1.8

0 1
1
2
3

<u>FIG. 8</u>

V/P'i  SYE'i

de MPi
0
de MVi
0
Zi.1

0 1
1
2
3

vers Fi (MRS)

de MPi
1
de MVi
0
Zi.2

0 1
1
2
3

de MPi
0
de MVi
1
Zi.7

0 1
1
2
3

de MPi
1
de MVi
1
Zi.8

0 1
1
2
3

<u>FIG. 9</u>

FIG.10

EP 0 284 534 B1